Europäisches Patentamt

European Patent Office

Office européen des brevets

(11) Veröffentlichungsnummer: **0 335 353**
**A2**

## (12) EUROPÄISCHE PATENTANMELDUNG

(21) Anmeldenummer: 89105498.3

(22) Anmeldetag: 29.03.89

(51) Int. Cl.4: **H02K 5/14 , H02K 11/00**

(30) Priorität: 31.03.88 DE 3810963

(43) Veröffentlichungstag der Anmeldung:
04.10.89 Patentblatt 89/40

(84) Benannte Vertragsstaaten:
**AT BE CH DE ES FR GB GR IT LI LU NL SE**

(71) Anmelder: **SCHUNK Motorensysteme GmbH**
**Industriepark 7**
**D-2875 Ganderkesee 1(DE)**

(72) Erfinder: **Köster, Walter**
**Neddenhüser Strasse 49**
**D-2875 Ganderkesee 1(DE)**

(74) Vertreter: **Stoffregen, Hans-Herbert, Dr.**
**Dipl.-Phys. et al**
**Patentanwälte Strasse & Stoffregen**
**Salzstrasse 11a Postfach 2144**
**D-6450 Hanau/Main 1(DE)**

(54) **Gitter aus elektrisch leitendem Blechmaterial.**

(57) Es wird ein Gitter (22) aus elektrisch leitendem Blechmaterial für die Verschaltung insbesondere eines Elektromotors vorgeschlagen, das als Tiefziehteil ausgebildet ist, so daß sich eine hohe Dichte und Anzahl von neben- und übereinanderliegenden Leiterbahnen (29) ergibt, die in in verschiedenen Ebenen (24, 26, 28) und gegebenenfalls entlang von gekrümmten Bahnen verlaufen.

# FIG.3

EP 0 335 353 A2

## Gitter aus elektrisch leitendem Blechmaterial

Die Erfindung bezieht sich im wesentlichen auf ein Gitter aus elektrisch leitendem Blechmaterial für die Verschaltung insbesondere eines Elektromotors für z.B. ein Elektrowerkzeug oder Fensterheber mit elektrisch voneinander getrennten Leiterbahnen bildenden Bereichen, die gegebenenfalls in verschiedenen Ebenen verlaufen.

Die entsprechenden Gitter werden als Blechbahnen ausgestanzt und zum Teil komplizierten Biegevorgängen unterzogen. Hierdurch bedingt sind hinsichtlich der Formgebung Grenzen gesetzt. Daher sind entsprechende Stanzgitter grundsätzlich eben ausgebildet und weisen nur bereichsweise Abwinklungen auf. Diese können jedoch nicht auf gekrümmten Bahnen verlaufen, da sich andernfalls die Basisfläche des Stanzgitters verziehen würde. Eindeutige geometrische Verhältnisse lägen dann nicht mehr vor.

Stanzgitter dienen zur Stromübertragung über größere Leiterquerschnitte und bieten gleichzeitig die Möglichkeit, Steckverbindungen als Mutter- und Vaterstecker mit auszuprägen. Anwendungsgebiete entsprechender Stanzgitter finden sich z.B. in Elektrowerkzeugen wie sie beispielhaft in der Deutschen Patentanmeldung 35 38. 939 beschrieben sind.

Ein diesbezügliches flächiges oder ebenes Stanzgitter besteht aus dünnem elektrisch leitendem Material mit äußeren und inneren Bandleitern, die nach Einbau in eine aus Kunststoff bestehende becherförmige Lagerbrücke voneinander getrennt werden. Das Stanzgitter dient dabei nicht nur dazu, den Kohlebürsten des Elektromotors Strom zuzuführen, sondern außerdem um elektrische Bauelemente wie z.B. Dioden, Kondensatoren oder Spulen zu verschalten, um gegebenenfalls erforderliche Entstörungen vornehmen zu können. Aufgrund der Quasi-Zweidimensionalität des Stanzgitters -die Strombahnen laufen im wesentlichen nur in einer Ebene-, sind jedoch Grenzen hinsichtlich der Bestückung mit elektrischen Bauelementen und der Ausbildung von Stromfaden gegeben, zumal konstruktionsbedingt die flächige Erstreckung der Stanzgitter stark eingegrenzt ist.

Aufgabe der vorliegenden Erfindung ist es daher, ein Gitter der eingangs genannten Art so auszubilden, daß im gewünschten Umfang eine elektrische Verschaltung mit Aufnahme von z.B. Entstörungsmitteln oder anderen elektrischen Schaltungen möglich ist, ohne daß im Vergleich zu bekannten im wesentlichen ebenen Stanzgittern eine größere ebene flächige Erstreckung erforderlich ist. Dabei soll auch die Möglichkeit gegeben sein, auf engstem Raum voneinander getrennte Leiterbahnen zur Verfügung zu stellen, ohne daß ein Falten oder Biegen erforderlich ist. Auch sollen gekrümmte Bahnen ausgebildet werden können, die in einer anderen Ebene als die Basisebene des Gitters verlaufen.

Diese Aufgabe wird im wesentlichen dadurch gelöst, daß das Gitter ein tiefgezogenes Teil ist und vorzugsweise bogen- oder becher- oder topfförmig ausgebildet ist. Dadurch, daß das Gitter ein vorzugsweise mehrstufig tiefgezogenes Teil ist, können auf engstem Raum Leiterbahnen in unterschiedlichen Ebenen und gekrümmt bzw. bogenförmig verlaufen. Insbesondere zeigen sich die Vorteile des erfindungsgemäßen Gitter z.B. bei einer Topf-oder Halbbogenform. Eine entsprechende Geometrie mit einer hohen Dichte an Leiterbahnen ist mit den herkömmlichen gestanzten Gittern nicht oder nur mit größtem biegetechnischem Aufwand möglich, wobei jedoch erheblich mehr Freiräume als bei dem tiefgezogenen Gitter zur Verfügung stehen muß. Bei einer Halbbogenform kann problemlos eine rinnenförmige Struktur gewonnen werden, die bei gestanzten Gittern nur dann im eingeschränkten Umfang realisierbar wäre, wenn zuvor das ebene Blechmaterial entlang der Bogenform Einschnitte erfährt, durch die ohne Faltenbildung die rinnenförmige Geometrie ermöglicht werden würde.

Insbesondere wird die Anzahl der Leiterbahnen auf einfache Weise dadurch erhöht und damit die Bestückungsmöglichkeit mit z.B. Dioden, Spulen, Kondensatoren und/oder Transistoren ermöglicht, daß in der Wandung des Gitters vorzugsweise mehrere stufenförmige Absätze vorhanden sind, die parallel zu einer z.B. vom Boden des Gitters bestimmten Basisfläche verlaufen können. Die entsprechenden als Plateaus ausgebildeten Ebenen können dabei von den angrenzenden vorzugsweise schräg verlaufenden Wandabschnitten elektrisch getrennt sein.

Durch die erfindungsgemäße Lehre ergibt sich demzufolge ein dreidimensionales nahezu beliebig durch die Form des oder der Ziehstempel bestimmte Geometrie des Gitters, durch das eine hohe Schaltungsdichte bei einem äußerst preiswerten Herstellungsverfahren zur Verfügung gestellt wird. Die einzelnen elektrisch voneinander getrennten Bereiche befinden sich in den Wänden und Ebenen des vorzugsweise mehrstufig gezogenen Gitters. Dabei können die Wände bogenförmig verlaufen, ohne daß es zu Verwerfungen bzw. zu Faltenbildungen in der Basisfläche kommt.

Um die einzelnen Bereiche zu trennen, wird das tiefgezogene Gitter zunächst in eine aus isolierendem Material bestehende Aufnahme eingebracht bzw. von einem entsprechenden Trägermaterial umspritzt, um anschließend die Bereiche des gezogenen Gitters durch vorzugsweise Schneiden zu trennen. Um dies mit einfachen Mitteln zu ermöglichen, weisen die zur Basisfläche schräg verlaufenden Wandungen, und zwar in bezug auf die Basisfläche einen Winkel von vorzugsweise 70 bis 80°, insbesondere von ca. 75° auf.

Die Querschnittsform eines entsprechenden Gitters kann einer einfachen L- oder Treppenform oder einer U-Form oder einer Doppel- oder Mehrfach-U-Form in Form von einer Wellpappen struktur entsprechen, um sodann durch Freischneiden mehrere neben- und/oder übereinander in verschiedenen Ebenen verlaufende elektrische Leiterbahnen zur Verfügung zu stellen. Mit anderen Worten bildet das erfindungsgemäße Gitter eine Einheit von mehreren nebeneinander horizontal und vertikal verlaufenden Einzelgittern.

Mit den erfindungsgemäßen Gittern können erhebliche Höhenunterschiede überbrückt werden, so daß hinreichende Verschaltungsmöglichkeiten mit elektrischen und elektronischen Bauelementen bestehen.

Durch das Herstellungsverfahren des Ziehens und anschließenden Schneidens können die Leiterbahnen bzw. Strompfade ohne Biegen oder Kanten gebildet werden, so daß die diesbezüglichen Nachteile bei den im wesentlichen ebenen zweidimensionalen Stanzgittern vermieden werden.

Erfindungsgemäß wird des weiteren ein Verfahren zur Herstellung eines Gitters aus elektrisch leitendem Blech-Material für die Verschaltung eines Elektromotors für z.B. ein Elektrowerkzeug oder Fensterheber mit elektrisch voneinander getrennten Leiterbahnen bildenden Bereichen, die gegebenenfalls in verschiedenen Ebenen verlaufen, vorgeschlagen, das sich dadurch auszeichnet, daß Abschnitte des Blech-Materials nacheinander zumindest einstufig, vorzugsweise zwei- oder dreistufig tiefgezogen werden und anschließend zur Gewinnung der Leiterbahnen bereichsweise freigeschnitten werden, wobei die Abschnitte über zumindest einen einen Randstreifen bildenden Randbereich des Blechmaterials verbunden werden. Vorzugsweise werden die Abschnitte über zwei Randstreifen verbunden, durch die der Transport während des Bearbeitungsvorganges zur Herstellung des im wesentlichen fertigen Gitters erfolgt.

Durch das erfindungsgemäße Verfahren sind zusätzliche Hilfswerkzeuge wie z.B. Transportbänder nicht erforderlich, um die tiefgezogenen Blech-Materialabschnitte, aus denen die erfindungsgemäßen Gitter hergestellt werden, von Bearbeitungsstation zu Bearbeitungsstation zu transportieren. Hierdurch ist eine Verkürzung der Montagezeit gegeben.

Dadurch, daß die Gitterbereiche zu beiden Seiten von Blechmaterialstreifen gehalten werden, ergibt sich des weiteren der Vorteil, daß die Bereiche positionsgenau in die einzelnen Bearbeitungsstationen eingebracht werden, da ein Verdrehen oder Verkanten während des Transportes nicht möglich ist.

Schließlich ist vorgesehen, daß die Randstreifen mit Aussparungen versehen werden, in die ein Förderorgan eingreift. Folglich kann ohne Auflage auf z.B. einem Förderband das Blech-Material transportiert werden, wobei die Förderung selbst durch ein unmittelbares oder mittelbares Eingreifen eines Antriebs in die Aussparungen erfolgt.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von in der Zeichnung dargestellten bevorzugten Ausführungsbeispielen.

Es zeigen:

Fig. 1 Stanzgitter während des Fertigungsprozesses nach dem Stand der Technik,

Fig. 2 Gitter während des Fertigungsprozesses nach der Erfindung,

Fig. 3 eine Draufsicht auf ein erfindungsgemäßes dreidimensionales Gitter,

Fig. 4 eine Schnittdarstellung entlang der Linie IV-IV in Fig. 3,

Fig. 5 eine Schnittdarstellung entlang der Linie V-V in Fig. 3,

Fig. 6 eine Schnittdarstellung entlang der Linie VI-VI in Fig. 3,

Fig. 7 einen Schnitt einer weiteren Ausführungsform eines erfindungsgemäßen Gitters,

Fig. 8 das Gitter nach Fig. 7 mit durch Schneiden gewonnenen Leiterbahnen,

Fig. 9 eine Draufsicht auf eine weitere Ausführungsform eines erfindungsgemäßen Gitters,

Fig. 10 eine prinzipielle Darstellung eines Schnitts entlang der Linie XI-XI in Fig. 9 ohne getrennte Bereiche,

Fig. 11 die Darstellung nach Fig. 10, jedoch mit getrennten Leiterbahnen,

Fig. 12 eine Prinzipdarstellung eines Schnitts im Bereich XII der Fig. 9,

Fig. 13 eine Vorderansicht eines ein erfindungsgemäßes Gitter aufnehmenden Trägers,

Fig. 14 eine Rückseitenansicht eines den Träger verschließenden Deckels nach Fig. 13,

Fig. 15 eine den Deckel abdeckende Dichtung,

Fig. 16 eine auseinandergezogene Darstellung des Trägers mit Deckel, Dichtung und Gitter gemäß Fig. 3, 13, 14 und 15 und

Fig. 17 eine Prinzipdarstellung einer Kontaktierung eines Gitters.

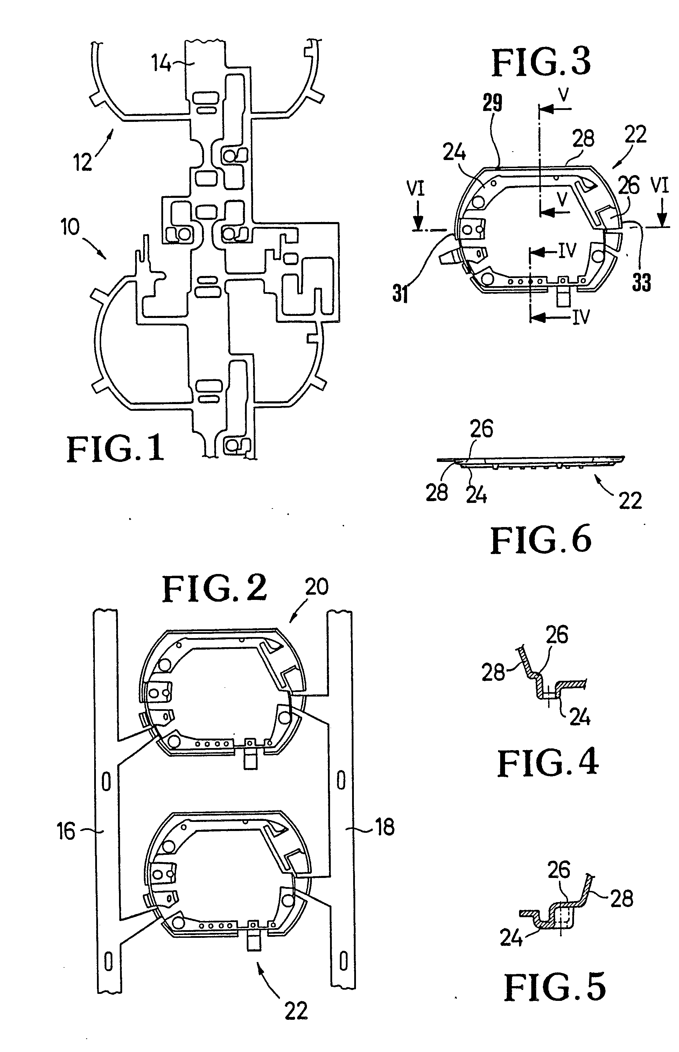

In Fig. 1 ist ein Ausschnitt von nach dem Stand der Technik bekannten im wesentlichen ebenen Stanzgittern (10) und (12) während des Herstellungsprozesses dargestellt. Die Stanzgitter (10) und (12) werden aus Blechbahnen gestanzt, wobei einige Bereiche gebogen bzw. gefaltet werden können, um den Anforderungen entsprechend Leiterbahnen zur Verfügung zu stellen. Durch die Biege- bzw. Falttechnik bedingt ist jedoch die Anzahl bzw. die Dichte der Leiterbahnen stark eingeschränkt. Die einzelnen Stanzgitter (10) und (12) sind durch einen Streifen miteinander verbunden, durch den der Transport von Bearbeitungsstation zu Bearbeitungsstation erleichtert wird. Dieser Streifen (14) verläuft mittig durch die Stanzgitter (10) und (12), um im außenliegenden Bereich die erforderlichen Stanzungen, Biegungen und Faltungen vornehmen zu können.

Bei dem Transport der durch den Streifen (14) miteinander verbundenen Stanzgittern (10) und (12) muß darauf geachtet werden, daß diese nicht gegeneinander verdreht werden, da andernfalls die sich anschließenden weitgehend voll automatisch ablaufenden Bearbeitungen zu Fehlern führen können.

Um ein Gitter für z.B. einen Elektromotor eines Werkzeuges oder z.B. Fensterhebers im Vergleich zu Stanzgittern mit einer höheren Anzahl und/oder Dichte von Leiterbahnen zur Verfügung zu stellen, wird erfindungsgemäß vorgeschlagen, daß die Gitter als ein- oder vorzugsweise mehrstufig tiefgezogenes Teil ausgebildet werden. Entsprechende tiefgezogene Gitter während eines Bearbeitungsprozesses sind in der Fig. 2 dargestellt und mit dem Bezugszeichen (20) und (22) versehen. Die über Randstreifen (16) und (18) verbundenen Gitter (20) und (22) werden ebenfalls aus einem Blechstreifen hergestellt, der nach Einbringen von Schnitten durch ein oder mehrere Stempel aufweisende Tiefziehformen bewegt und anschließend bereichsweise freigeschnitten bzw. freigestanzt wird, um Leiterbahnen in unterschiedlichen Ebenen und Verläufen zu erhalten. Dabei werden zur Vereinfachung des Weitertransportes und des Zuführens zu den nachfolgenden Bearbeitungsstationen die Ziehgitter (20), (22) von den Randstreifen (16) und (18) gehalten. Durch das Verbinden über die Randstreifen (16) und (18) ist im Vergleich zu der Verbindungsart nach Fig. 1 weitgehend gewährleistet, daß die Gitter (20) und (22) während des Transportes nicht gegeneinander verdreht oder verbogen werden können, so daß eine störfreie Weiterbearbeitung erfolgen kann. In den Randstreifen (16) und (18) sind ferner Aussparungen vorgesehen, in die Antriebsmittel eingreifen, um die aneinandergereihten und zusammenhängenden Gitter (20) und (22) fördern zu können.

Die tiefgezogenen Gitter sind im Ausführungsbeispiel nach der Fig. 2 topfförmig ausgebildet, wie auch die Detailzeichnungen nach den Fig. 3 bis 5 verdeutlichen sollen.

So besteht das Gitter (22) aus einer Bodenfläche (24), zu der parallel eine Stufe (26) verläuft, an die sich eine konisch erweiternde Umfangswandung (28) anschließt.

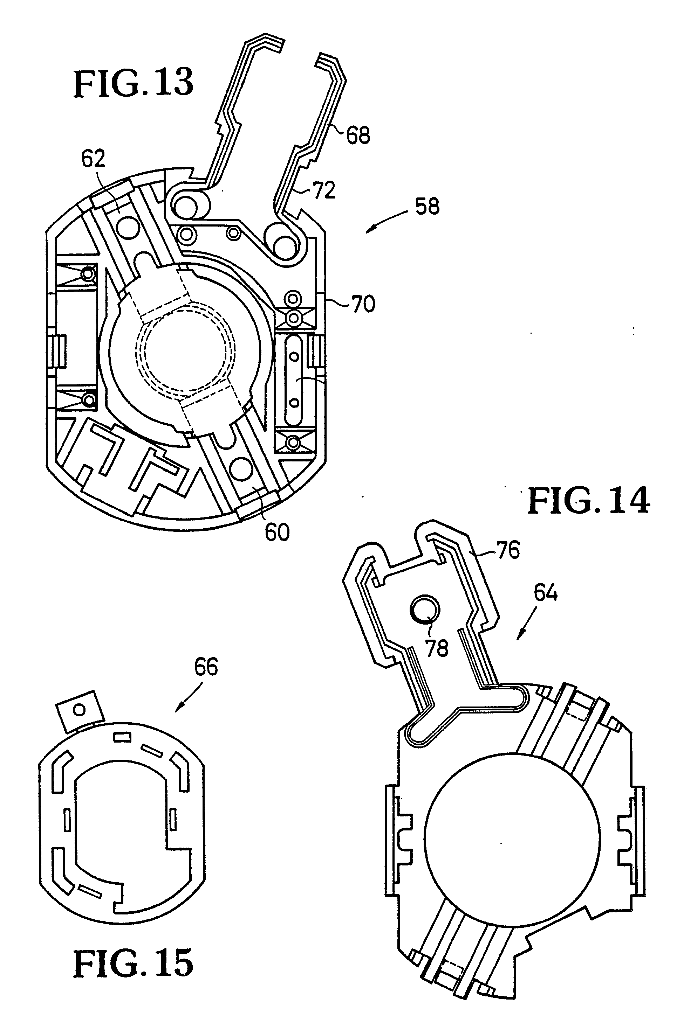

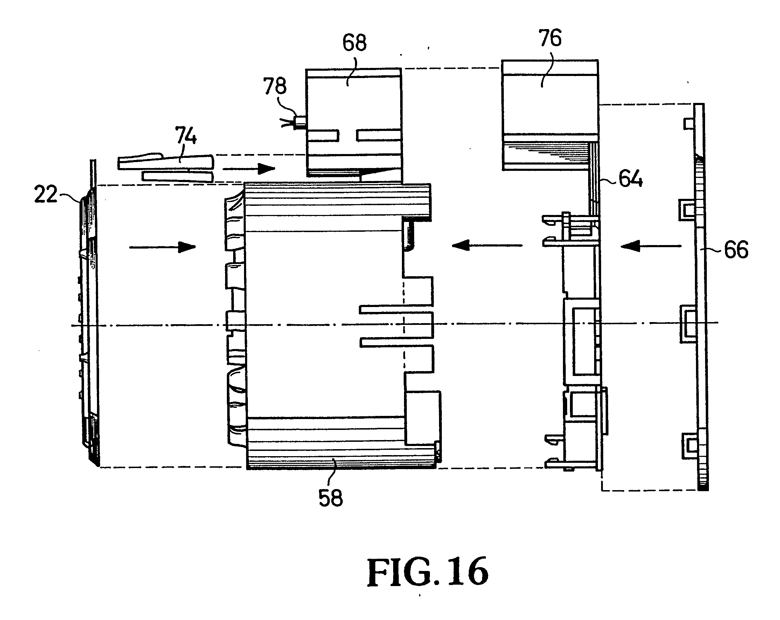

Das Gitter (22) ist demzufolge durch die Basis- oder Bodenfläche (24), die Stufe (26) und sich an die Stufe anschließenden Wandungen mehrstufig ausgebildet, die insbesondere nach Einbau in einem Träger, (s. z.B. Fig. 13 und Fig. 16) und Durchschneiden einzelner Bereiche in einer Vielzahl voneinander getrennte elektrische Leiterbahnen unterteilt werden. Dabei können sich die Leiterbahnen sowohl in den einzelnen parallel zueinander verlaufenden Ebenen, als auch senkrecht zu diesen erstrecken. Hierdurch ergibt sich auf engstem Raum eine hohe Dichte von Leiterbahnen, die eine umfassende Verschaltung des Elektromotors mit z.B. Entstörungsmitteln oder anderen elektrischen Schaltungen wie z.B. einer Drehzahlregelung ermöglichen.

So kann ein Strompfad (29) von Punkt (31) zu Punkt (33) verlaufen. Der Strompfad (29) ist folglich gekrümmt und verläuft in einer zur Basisfläche (24) abgewinkelten Ebene. Durch das Tiefziehen ist dies möglich, ohne daß sich in der Basisfläche (24) Falten ergeben. Bei einem Stanzgitter, das bereichsweise gebogen wird, wäre dagegen ein Verlauf einer Leiterbahn entsprechend der Bahn (29) ausgeschlossen.

Die Mehrstufigkeit bzw. topf- oder becherförmige Ausbildung des Gitters (22) ergibt sich insbesondere auch durch die Schnittdarstellung der Fig. 4, 5 und 6.

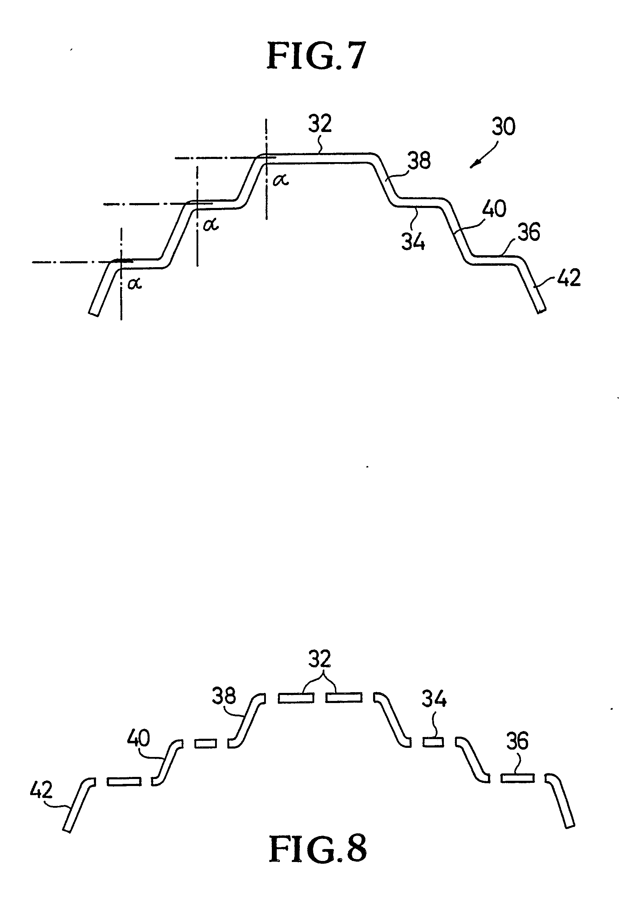

Anhand der Fig. 7 und 8 soll verdeutlicht werden, daß die tiefgezogenen Gitter in bezug auf die Stufen auch höhergradig ausgebildet werden können. Das in Fig. 7 dargestellte Gitter (30) weist insgesamt drei Stufen auf, die von der Bodenfläche (32) und von zwei parallel hierzu verlaufenden Ebenen (34) und (36) bestimmt sind. Zwischen den einzelnen Stufen (32), (34) und (36) verlaufen sie ebenfalls nach außen, also von der Bodenfläche (32) weg erweiternde Umfangswandungen (38), (40) und (42), die bogenförmig verlaufen können. Dabei beschreiben die Wandungen (38), (40) und (42) zu der jeweiligen dazwischenliegenden Stufe vorzugsweise einen Winkel $\alpha$ von 70° bis 80°, vorzugsweise von 75°. Durch eine entsprechende Geometrie ist durch einfaches Schneiden ein Aufteilen der Ebenen bzw. Stufen in voneinander getrennte Leiterbahnen möglich, wie es anhand der Fig. 8 verdeutlicht ist.

Man erkennt, daß eine Vielzahl von einander getrennten Stromleitern z.B. dadurch zur Verfügung gestellt werden, daß die Stufen (36) und (38) bzw. die Bodenfläche (32) von den angrenzenden schräg verlaufenden Wandungen (38), (40) und (42) getrennt werden. Dabei kann die Bodenfläche (32) noch in zwei getrennte Bereiche untergliedert werden.

Das Schneiden erfolgt grundsätzlich erst dann, wenn das Gitter (30) in einem Träger eingesetzt oder von einem Trägermaterial umspritzt ist, da andernfalls die zu trennenden Bereiche auseinanderfallen würden. Dabei kann das Trennen so erfolgen, daß sowohl parallel zu der Bodenfläche (32) als auch axial verlaufende Leiterbahnen zur Verfügung gestellt werden, so daß eine Vielfalt von Verschaltungsmöglichkeiten gegeben ist.

So ist es ohne weiteres möglich, durch Ausbildung der topfförmigen Ziehgitter Höhenunterschiede von bis zu 30mm zu überbrücken, wodurch die Vielfalt der Anwendungsmöglichkeiten erkennbar wird.

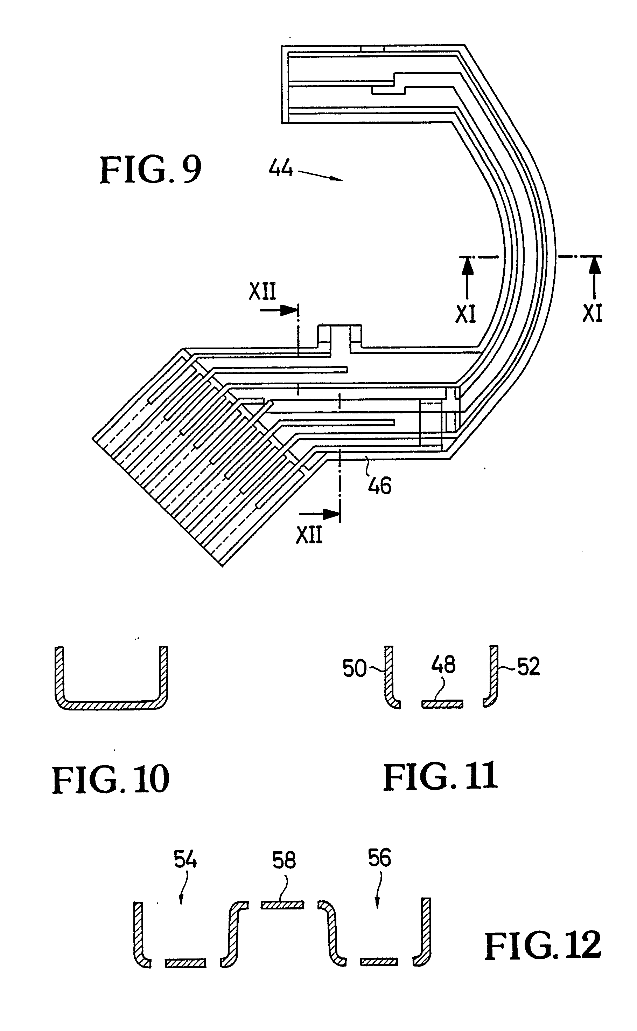

Erfindungsgemäß hergestellte Gitter brauchen jedoch nicht notwendigerweise eine Topf- oder Becherform aufzuweisen. Vielmehr ist jede gewünschte von der Form der Stempel bzw. Ziehform abhängige Geometrie möglich. So ist in Fig. 9 beispielhaft in Draufsicht ein bogenförmiges Ziehgitter (44) dargestellt, das im Bereich des Schnitts XI-XI eine U-Form und im Bereich der Schenkel (46) eine Art Wellpappenstruktur aufweisen kann. Hierdurch ist eine hohe Leiterbahndichte möglich, wobei im Bereich des Schnitts XI-XI z.B. dadurch drei Leiterbahnen zur Verfügung gestellt werden können, daß das U-förmig gezogene Gitter im Bereich seiner Bodenfläche (48) von den angrenzenden Wandungen (50) und (52) getrennt wird.

Es findet sich demzufolge nach dem Ziehvorgang ein geschlossenes U gemäß Fig. 10 vor, das dem Grunde nach eine einzige Leiterbahn ist. Nach dem Trennen sind jedoch insgesamt drei Leiterbahnen (48), (50) und (52) vorhanden.

Im Bereich des Schenkels (56) ist eine noch höhere Leiterbahnanzahl dadurch erzielbar, daß der Schenkel (46) eine Art Wellpappenstruktur bestehend aus zwei gleichsinnig gerichteten U-förmigen Abschnitten (54) und (56) verbunden über einen Steg (58) aufweist. Entsprechend der zeichnerischen Darstellung können dann die Bodenbereiche von den Wandungen getrennt werden, um nach dem Ausführungsbeispiel insgesamt acht getrennte Leiterbahrnen zur Verfügung zu stellen, die mit einem Stecker verbindbar sind.

Erfindungsgemäße Ziehgitter wie z.B. die Ziehgitter (20) und (22) gemäß der Fig. 2 bis 6 können in einem Träger (58) angeordnet werden, wie er in den Fig. 13 und 16 dargestellt ist. Ein diesbezüglicher Träger (58) kann z.B. in einem Motorgehäuse eines dauermagneterregten Kommutatormotors angeordnet werden und weist hierzu von Stegen begrenzte Aufnahmen (60) und (62) für Kohlebürsten auf, die mit dem Kommutator wechselwirken. Außenseitig ist der Träger (58) von einem Deckel (64) verschließbar, der seinerseits von einer Dichtung (66) bereichsweise abgedeckt wird, die zwischen dem Motorgehäuse und einem in axialer Richtung des Motors sich anschließenden weiteren Gehäuse wie z.B. Getriebegehäuses eines elektromotorisch angetriebenen Kraftfahrzeug-Fensterhebers dichtend angeordnet wird. Der Träger (58) weist einen radial abragenden Ansatz (68) auf, durch den elektrische Leitungen zur Stromversorgung und Verschaltung von den von dem Träger (58) aufgenommenen elektrischen und elektronischen Elementen geführt werden. Der Ansatz (68) weist eine am Trägergehäuse (70) angrenzende Verjüngung (72) auf, die von einer Dichtung (74) teilweise umgeben ist, die ihrerseits gegenüber einem den Träger (58) aufnehmenden Gehäuse wie Motorgehäuse im Bereich der Durchführung (68) abdichtet. Der Deckel (64) weist einen den Ansatz (68) aufnehmenden Ansatz (76) auf, der bis auf eine Öffnung (78) außenseitig verschlossen ist. Über die Öffnung (78) kann in dem von den Ansätzen (68) und (76) umschlossenen Raum eine Dichtmasse wie Silikon eingespritzt werden. Im Bereich der Zuführungen der Leitungen (78) ist eine nicht dargestellte Klemmformdichtung vorgesehen, die zum einen eine Lagefixierung der elektrischen Leitungen (78) gewährleistet und zum anderen sicherstellt, daß die Dichtmasse bodenseitig nicht austreten kann.

Der Zusammenbau von Träger (58), Ziehgitter (22), Deckel (64) und Dichtungen (66) und (74) ist in der Fig. 16 angedeutet.

Montagemäßig muß demzufolge der Träger (58) mit dem Deckel (64) sowie mit den Dichtungen (74) und (66) versehen werden. Dieses zeitaufwendige Zusammenbauen kann nach einem weiteren Vorschlag der Erfindung dadurch vereinfacht werden, daß der Deckel (64) mit der Flachdichtung (66) und der Trägerkörper (58) mit der Durchführung (68) und der Dichtung (74) in einem Zweikomponentenspritzverfahren jeweils hergestellt werden, so daß die erwähnten vier Teile auf zwei reduzierbar sind.

Bei diesem Zweikomponentenverfahren kann es sich um ein Hart/Weich/Hart-Spritzen handeln. Die entsprechend hergestellten Teile erleichtern die Montage und stellen zudem sicher, daß insbesondere die Dichtungen positionsgenau dem Deckel (66) bzw. der Durchführung (68) zugeordnet sind.

Selbstverständlich ist es nicht erforderlich, daß der Trägerkörper (68) und der Deckel (64) mit den Ansätzen (68) und (76) versehen ist. Vielmehr können die elektrischen Anschlußkabel vollständig innerhalb der Dichtung (66) verlaufen, die ihrerseits beidseitig von nicht dargestellten Gehäuseteilen druckbeaufschlagt sind. Innerhalb der Dichtung (66) sind die Anschlußkabel vorzugsweise abisoliert und verzinnt.

Erfindungsgemäß wird durch die Ziehgitter die Möglichkeit gegeben, eine hohe Dichte und Anzahl von Leiterbahnen zur Verfügung zu stellen. Nach einem weiteren Vorschlag der Erfindung ist nun vorgesehen, daß die Reihenfolge der Kontaktierung der Leiterbahnen nicht in der Reihenfolge nach eine vorgegebenen Norm-Steckeranordnung aufgebaut sein muß. Vielmehr kann die aufgeprägte Norm durch eine Art Adapter aufgehoben werden, um den Anforderungen und Einsatzgebieten entsprechend ein und demselben Stecker Leiterbahnen in voneinander abweichenden Folgen zuzuordnen. Dabei kann das Steckergehäuse an dem die Leiterbahnen tragenden Kunststoffteil mit angespritzt werden, so daß dem Ziehgitter weitestgehend vollautomatisch die entsprechenden Stecker zuordbar sind.

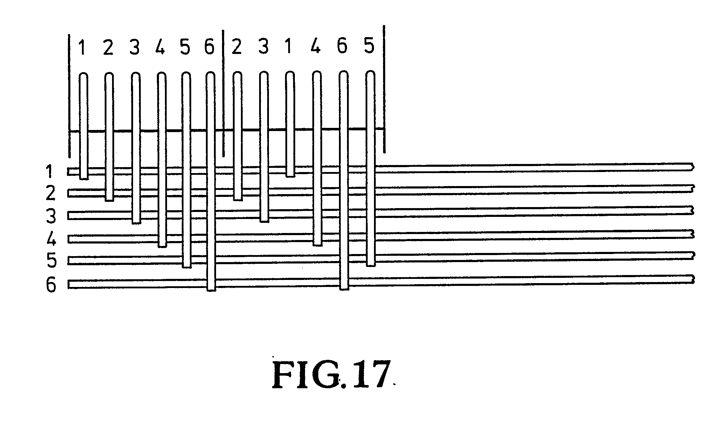

Wie die Fig. 17 zeigt, können Leiterbahnen (1) bis (6) in unterschiedlicher Reihenfolge mit Steckeranschlüssen (1) bis (6) versehen werden, ohne daß der Stecker selbst eine Änderung erfahren muß. Dabei kann das Verbinden zwischen der Steckeranordnung und den Leiterbahnen selbst so auseinandergezogen werden, daß trotz geringer Leiterbahnabstände die erforderlichen Sicherheitsabstände im Steckerbereich vorliegen.

Durch diesen selbstverständlich nicht nur auf erfindungsgemäße Ziehgitter anwendbaren Vorschlag ergibt sich ferner die Möglichkeit, daß fast in jeder Winkelstellung zum aufgebauten Gitter die Stecker aus dem jeweiligen Gerät austreten können.

**Ansprüche**

1. Gitter (22, 30) aus elektrisch leitendem Blechmaterial für die Verschaltung insbesondere eines Elektromotors für z.B. ein Elektrowerkzeug oder einen Fensterheber mit elektrisch voneinander getrennten Leiterbahnen bildenden Bereichen, die gegebenenfalls in verschiedenen Ebenen verlaufen,
**dadurch gekennzeichnet,**
daß das Gitter (22, 30) ein zumindest einstufig tiefgezogenes Teil ist.

2. Gitter nach Anspruch 1,
**dadurch gekennzeichnet,**
daß das Gitter (22, 30) vorzugsweise becher- oder topfförmig oder halbrundschalenförmig ausgebildet ist und die die Leiterbahnen bildenden Bereiche (24, 26, 28, 32, 34, 36, 38, 40, 42) vorzugsweise freigeschnitten sind.

3. Gitter nach Anspruch 1,
**dadurch gekennzeichnet,**
daß das Gitter (22, 30) zumindest einen stufenförmigen Absatz (26, 34, 36) aufweist.

4. Gitter nach Anspruch 3,
**dadurch gekennzeichnet,**
daß das Gitter mehrere stufenförmige Absätze (34, 36) aufweist, die in gleichen oder parallel zueinander verlaufenden Ebenen angeordnet sind.

5. Gitter nach Anspruch 4,
**dadurch gekennzeichnet,**
daß die stufenförmigen Absätze (26, 34, 36) von den angrenzenden Wandabschnitten (28, 38, 40, 42) des Gitters (22, 30) elektrisch getrennt sind.

6. Gitter nach Anspruch 1,
**dadurch gekennzeichnet,**
daß die Wandung bzw. deren Abschnitte (28, 38, 40, 42) in bezug auf eine Basisfläche (24, 32) des Gitters (22, 30) einen Winkel $\alpha$ mit $70° \leq \alpha \leq 80°$, vorzugsweise $\alpha = 75°$ beschreibt.

7. Gitter nach Anspruch 1,
**dadurch gekennzeichnet,**
daß zur Erzielung der Leiterbahnen nach Anordnen des Gitters in einer Aufnahme wie einem Träger (14) Blechmaterialien vorzugsweise durch Schneiden entfernbar sind.

8. Gitter nach Anspruch 1,
**dadurch gekennzeichnet,**
daß Leiterbahnen (29) in einer zur Basisfläche (24) des Gitters (22) abgewinkelten Ebene (28) verlaufen und zumindest bereichsweise dem Verlauf eines oder mehrerer Bögen folgen.

9. Verfahren zur Herstellung eines Gitters aus elektrisch leitendem Blechmaterial für die Verschaltung insbesondere eines Elektromotors für z.B. ein Elektrowerkzeug oder einen Fensterheber mit elektrisch voneinander getrennten Leiterbahnen bildenden Bereichen, die gegebenenfalls in verschiedenen Ebenen verlaufen,
**dadurch gekennzeichnet,**
daß Abschnitte des Blechmaterials nacheinander zumindest einstufig tiefgezogen und anschließend zur Gewinnung der Leiterbahnen bereichsweise freigeschnitten werden, wobei die Abschnitte über zumindest einen einen Randstreifen bildenden Randbereich des Blechmaterials verbunden werden.

10. Verfahren nach Anspruch 9,
**dadurch gekennzeichnet,**
daß die Abschnitte über zwei außenliegende Randstreifen verbunden bleiben, durch die der Transport während des Bearbeitungsvorgangs zur Herstellung der im wesentlichen fertigen Gitter erfolgt.

11. Verfahren nach Anspruch 10,
**dadurch gekennzeichnet,**
daß der Randstreifen mit Aussparungen versehen wird, die von einem Förderorgan erfaßt werden.

FIG.1

FIG.3

FIG.6

FIG.2

FIG.4

FIG.5

# FIG.7

32   38   30   α   38   40   36   34   α   α   42   α

# FIG.8

32   38   40   34   36   42

FIG.9

44

XII

XI    XI

46

XII

FIG.10

50    48    52

FIG.11

54    58    56

FIG.12

**FIG.13**

62

68

72

58

70

60

**FIG.14**

76

64

78

66

**FIG.15**

FIG.16

**FIG. 17**